# EUROPÄISCHE PATENTSCHRIFT

(11) **EP 2 252 822 B1**
(45) Veröffentlichungstag und Bekanntmachung des Hinweises auf die Patenterteilung: **04.04.2012**
(21) Anmeldenummer: 09776387.4
(22) Anmeldetag: 18.02.2009
(51) Int. Cl.: F16L 25/00

(54) **ANSCHLUSSVORRICHTUNG FÜR EINEN WELLSCHLAUCH**
CONNECTING DEVICE FOR A CORRUGATED HOSE
DISPOSITIF DE RACCORDEMENT POUR UN TUYAU ONDULÉ FLEXIBLE

(43) Veröffentlichungstag der Anmeldung: 24.11.2010
(73) Patentinhaber: SCHLEMMER GMBH, 85586 Poing (DE)
(72) Erfinder: LEI, Yanning, 85646 Neufarn (DE); GERKING, Michael, 80687 München (DE)
(74) Vertreter: Geyer, Fehners & Partner
(86) Internationale Anmeldenummer: PCT/EP2009/001150
(87) Internationale Veröffentlichungsnummer: WO 2010/094298

(56) Entgegenhaltungen:
- EP-A- 0 959 667
- EP-A- 1 039 206
- DE-A1- 3 815 173
- US-A1- 2003 155 767

## Beschreibung

Die Erfindung bezieht sich auf eine Anschlußvorrichtung für einen Wellschlauch, mit einem Wellschlauch, einem Kupplungsteil sowie einem in dieses einführbaren Einsteckteil, wobei das Kupplungsteil eine innere Halteeinrichtung umfaßt, durch die der Wellschlauch in Richtung auf das Einsteckteil hindurchführbar ist, die dabei elastisch federnde Radialbewegungen ausführen kann, ihn aber gegen ein Abziehen sichert, wobei ferner der axiale Endabschnitt des Wellschlauches bis zum Umschlag in eine im Inneren des Einsteckteiles sitzende Dichtungsbuchse hineinragt, die einen axialen Strömungsdurchlaß ausbildet, und wobei im eingekuppelten Zustand der Halteeinrichtung des Kupplungsteils axial in die zugewandte Aufnahmeöffnung des Einsteckteiles hineinragt und dabei gegen eine Freigabe des Wellschlauches blockiert wird.

Aus der DE 39 03 355 A1 ist eine als Hülse ausgebildete Anschlußvorrichtung bekannt, in die ein Wellschlauch eingeschoben wird. Mittels einer in der Wandung der Hülse ausgeformten, federnd auslenkbaren Zunge mit einem in das Hülseninnere gerichteten Vorsprung zum Eingriff in ein Wellental des Wellschlauches kann der in die Hülse eingeführte Wellschlauch axial fixiert werden. Zur Abdichtung desselben gegenüber der Hülse ist zum einen ein O-Ring vorgesehen, der in ein Wellental des Wellschlauches eingelegt ist, sowie ferner eine stirnseitig gegen das Ende des Wellrohres anliegende weitere Dichtung, die ihrerseits in einer ringförmigen Axialnut der Hülse sitzt und gegen das eingeschobene Ende des Wellschlauches anliegt. Hier muß zum Zwecke der Abdichtung noch vor dem Einschieben des Wellschlauches der O-Ring in ein Wellental am Wellschlauchende eingebracht werden, da die stirnseitige Dichtung häufig nicht ausreichend abdichtet, insbesondere wenn auf den Wellschlauch Kräfte in Richtung aus der Hülse heraus einwirken.

Die DE 197 23 410 A1 beschreibt eine Befestigungsanordnung für einen Wellschlauch auf einem im wesentlichen hohlzylindrischen Stutzen, auf den der Wellschlauch aufgeschoben und dort dann mittels mindestens eines in Längsrichtung des Wellschlauches angeordneten Federbeines gegen ein axiales Abziehen des Wellschlauches gesichert wird. Dabei werden das bzw. die Federteln(e) von einem ringförmigen Klemmring gegen die Außenseite des Wellschlauches gedrückt, wodurch eine ausreichende Sicherheit gegen ein Abziehen des Wellschlauches vom Anschlußstutzen erreicht wird. Der Wellschlauch Ist gegenüber dem Anschlußstutzen durch einen in ein Wellental eingelegten O-Ring abgedichtet. Für die Dichtung werden wiederum zwei Teile benötigt, nämlich der O-Ring und der Klemmring zum Andrücken der Federbeine radial nach innen gegen den Wellschlauch und damit gegen den Anschlußstutzen.

Bei der Anschlußvorrichtung aus der DE 199 43 764 A1 wird wiederum ein Wellschlauch auf einen Anschlußstutzen aufgeschoben und mittels einer zweiteiligen, aufklappbaren Sicherungsmanschette gegen ein Abziehen gehalten. An der Innenseite der Sicherungsmanschette sind Eingriffselemente zum Einführen In ein Wellental der gewellten Außenkontur des Wellschlauches vorgesehen, wobei die zwei Sicherungsmanschettenteile relativ zueinander beweglich und formschlüssig miteinander sowie mit der Außenseite des Wellschlauches verrastbar sind. Mittels eines Filmscharniers sind die beiden Manschaftenteile gelenkig an dem Anschlußstutzen befestigt. Damit wird eine sehr gute Abzugsicherung gegen ein unerwünschtes Abziehen des Wellschlauches vom Anschlußstutzen erreicht. Die Abdichtung erfolgt zwischen Wellschlauch und Anschlußstutzen aber ausschließlich durch die Paßgenauigkeit dieser beiden aufeinander geschobenen Teile. Zum. Aufklappen der Slchenrngsmanschette bei der Montage ist ein relativ großer Freiraum erforderlich, der bei beengten Einbauverhältnissen oftmals nicht zur Verfügung steht.

Aus der DE 10 2005 031 871 B3 ist eine Anschlußvorrichtung für einen Wellschlauch bekannt, die ein Kupplungsteil umfaßt, in das ein Einsteckteil einführbar ist. Am einsteckseitigen Ende des Einsteckteiles ist ein Anschlußstutzen mit einem Anschlußnippel angebracht, auf welchen ein Wellschlauch aufgeschoben ist. Ferner ist eine Formdichtung vorgesehen, die auf dem Anschlußstutzen sitzt und in die das Wellschlauchende einschiebbar ist. Axial über dieser Dichtung ist eine aufschiebbare Hülse ausgebildet, die elastische Federbeine aufweist, die mit am Anschlußstutzen angebrachten Arretiermitteln zweistufig in Eingriff bringbar sind. In einer ersten Stufe ist die Hülse am Anschlußstutzen so befestigt, daß der Innendurchmesser der Dichtung das Einführen des Wellschlauchendes erlaubt, während in der zweiten Stufe die Hülse vollständig über die Dichtung geschoben und ihre Federbeine mit dem Arretiermitteln fixierend verbunden sind. Dabei wird die Dichtung derart auf die Wellschlauchaußenwand gepreßt, daß die Hülse mit ihrer Innenseite die Dichtung gegen den Anschlußstutzen und auf den eingeschobenen Wellschlauch drückt. Für eine wirklich sichere Halterung des Weitschlauches in der Vorrichtung ist jedoch an dem Ende derselben, an dem der Wellschlauch In die Vorrichtung einläuft, noch eine Wellschlauchabzugsicherung in Form einer zweiteiligen, aufklappbaren Sicherungsmanschette vorgesehen, die an ihrer Innenseite mit Eingriffvorrichtungen zum formschlüssigen Eingriff in die gewellte Außenkontur des Wellschlauches beim Zusammenklappen und Verriegeln ihrer beiden Halbschalen umfaßt. Diese bekannte Vorrichtung bietet zwar eine sehr gute Sicherung gegen ein Abziehen des Wellschlauches vom Anschlußstutzen, eine sehr zuverlässige Abdichtung zwischen beiden Teilen und kann auch in einem vormontierten Zustand angeliefert werden. Dennoch ist die gesamte Vorrichtung relativ kompliziert und aufwendig und auch ihre Montage ist wegen der Zweistufigkeit der Verriegelung zwischen Kupplungsteil und Einsteckteil sowie des zusätzlichen Anschlusses und Verschlusses der zweiteiligen Sicherungsmanschette gegen ein Abziehen relativ kompliziert.

Aus der US 20031155767 A1 ist eine Anschlußvorrichtung der eingangs genannten Art bekannt, bei der der axiale Endabschnitt des Wellschlauches im eingekuppelten Zustand der Halteeinrichtung in eine in ihrem Inneren konisch zulaufende Dichtungsbuchse im Einsteckteil eingeführt ist.

Ausgehend hiervon will nun die Erfindung eine Anschlußvorrichtung für einen Wellschlauch zur Verfügung stellen, die bei weiterhin sehr guter Abdichtung einen vereinfachten Aufbau aufweist und eine besonders rasche Montage gestattet.

Erfindungsgemäß wird dies durch eine Anschlußvorrichtung für einen Wellschlauch der eingangs genannten Art dadurch erreicht, daß das Einsteckteil an seinem Außenmantel über den Umfang zueinander versetzt angebrachte, nach außen überstehende Rastnocken aufweist, wobei das Kupplungsteil an seinem Außenmantel mit radial ausfederbaren, der Anordnung der Rastnocken am Einsteckteil entsprechend angebrachten Rastarmen versehen ist, die beim axialen Einführen des Einsteckteiles in das Kupplungsteil unter elastischer radialer Auslenkung jeweils den zugeordneten Rastnocken überlaufen und anschließend bei Erreichen des eingekuppelten Zustands direkt axial hinter dem Rastnocken unter Verrastung mit diesem radial wieder einfedern, wobei das Kupplungsteil eine innere Halteeinrichtung umfaßt, die den durch das Kupplungsteil hindurchgeführten Wellschlauch gegen Abziehen sichert und elastisch federnde Radialbewegungen ausführen kann, und daß ferner die Halteeinrichtung des Kupplungsteiles im eingekuppelten Zustand in vorspannender Druckanlage mit der zugewandten axialen Stirnseite der Dichtungsbuchse steht.

Die erfindungsgemäße Anschlußvorrichtung ist zunächst relativ einfach im Aufbau, baut kurz und weist insbesondere auch in radialer Richtung einen besonders geringen Platzbedarf auf, was im Hinblick auf die üblicherweise beengte Einbausituation, in der solche Anschlußvorrichtungen z. B. in Verbindung mit Flüssigkeitsleitungen in Kraftfahrzeugen, etwa Wischwasser-Transportieitungen o. ä., verwendet werden, aber auch bei anderen Einsatzfällen von großer Wichtigkeit ist. Zudem läßt sich die erfindungsgemäße Anschlußvorrichtung auch aus preisgünstigem Kunststoffmaterial, z. B. POM, ausführen, da nicht die Verwendung von höherwertigen Materialien erforderlich ist, wie sie z. B. für die In der Vergangenheit ebenfalls oftmals eingesetzten kalt verpreßbaren Plattenendstücke nötig ist.

Die erfindungsgemäße Anschlußvorrichtung wird In der Praxis üblicherweise in einem vorkonfektioniertem Zustand geliefert, bei dem das Einsteckteil mit bereits In ihm angeordneter Dichtbuchse in das Kupplungsteil eingeführt ist, aber nur soweit, daß die Rastarme des Kupplungsteiles noch nicht die Rastnocken am Einsteckteil überlaufen haben, so daß die Verrastung zwischen Kupplungs- und Einsteckteil noch nicht ausgeführt ist. In diesem vorkonfektioniertem Zustand kann der Benutzer dann den Wellschlauch von einer Rollenware in der gewünschten Länge abschneiden, wonach der Schlauch in die Öffnung des Kupplungsteiles von außen ein- und durch dieses hindurchgeschoben und in die Dichtungsbuchse bis zum Anschlag an deren Ende eingeführt wird. Beim Einschieben werden die Rastarme des Kupplungsteiles durch die Außenkontur des Wellschlauches radial ausgefedert, so daß der Wellschlauch unbehindert bis zum Anschlag am Endflansch der Dichtungsbuchse ohne Schwierigkeit eingeschoben werden kann. Im eingeschobenen Zustand verrasten nun aber die Rastarme des Kupplungsteiles mit der Außenformgebung des Wellschlauches, indem die von diesen Rastarmen vorstehenden Rastabschnitte in ein Wellental zwischen zwei Wellenbergen außen am Wellschlauch eingreifen. Ein Herausziehen des Wellschlauches aus dem Einsteck- und Kupplungsteil ist dann allerdings nicht mehr möglich, weil bei einer rücklaufenden Bewegung des Wellschlauches die Rastarme des Kupplungsteiles nicht mehr ausfedern. Hat der Benutzer den Wellschlauch bis zum Anschlag in die vorkonfektionierte Anordnung eingeschoben, muß er anschließend nur noch Kupplungs- und Einsteckteil axial aufeinander zu bewegen, bis die Rastarme außen am Kupplungsteil mit den jeweils zugeordneten Rastnocken außen am Einsteckteil verrastet sind. Bei dieser anschließenden Axialbewegung wird die Halteeinrichtung im Inneren des Kupplungsteiles axial in die zugewandte Aufnahmeöffnung des Einsteckteiles, zumindest über einen anfänglichen Axialbereich hinweg, eingeschoben, ragt somit dort in das Einsteckteil hinein und liegt dabei an dessen Innenmantel so an, daß die durch die Halteeinrichtung erzielte Abziehsicherung des Wellschlauches entgegen einer Freigabe desselben blockiert wird. Im vorkonfektionierten Zustand, also während des Hindurchschiebens des Wellschlauches durch das Kupplungsteil, befindet sich die innere Halteeinrichtung des letzteren nicht in Eingriff mit dem Einsteckteil, so daß die für ein unbehindertes Einschieben des Wellschlauches erforderlichen Bewegungen, etwa radiale Ausfederbewegungen, wenn die Halteeinrichtung z. B. aus axial verlaufenden Federstegen mit an ihren vorstehenden Enden radial nach innen gerichteten Rastvorsprünge besteht, völlig unbehindert ausgeführt werden können.

Beim abschließenden axialen Zusammenführen von Kupplungsteil und Einsteckteil kommt die Halteeinrichtung im Inneren des Kupplungsteiles, wenn sie etwas in die zugewandte Aufnahmeöffnung des Einsteckteiles hineingelaufen ist, in Anlage zu der dort vorliegenden Endfläche der Dichtbuchse, deren Bemessung so erfolgt ist, daß sie im verrasteten Zustand von Kupplungsteil und Einsteckteil von der Halteeinrichtung axial um ein vorgegebenes Maß zusammengeschoben und damit komprimiert wird, wodurch die Abdichtung zwischen Wellschlauch und Einsteckteil durch den dabei erfolgten Druckaufbau innerhalb der Dichtungsbuchse besonders wirkungsvoll wird.

Das bei der Montage vorzunehmende Hineinschieben des Wellschlauches in die vorkonfektionierte Anordnung und das anschließende Verrasten von Kupplungs- und Einsteckteil sind zwei einfache, schnell durchzuführende Maßnahmen, die ein problemloses und auch rasches Montieren der Anschlußvorrichtung gewährleisten.

Das Kupplungsteil mit der in seinem Inneren ausgeformten Halteeinrichtung kann ebenso wie das Einsteckteil aus einem geeigneten Kunststoff, bevorzugt aus POM, kostengünstig hergestellt werden. Die im Inneren des Einsteckteiles sitzende Dichtungsbuchse wird ihrerseits aus einem geeigneten elastischen Material, etwa aus EPDM, NBR oder, besonders vorzugsweise, aus einem thermoplastischem Elastomer spritzgegossen.

Bei der erfindungsgemäßen Anschlußvorrichtung weist bevorzugt jeder Rastarm des Kupplungsteiles zwei axial ausgerichtete, in Umfangsrichtung des Kupplungsteiles zueinander versetzte Seitenschenkel auf, die an ihren vorstehenden Enden über einen in Umfangsrichtung verlaufenden Rastbügel miteinander verbunden sind, wobei der Abstand in Umfangsrichtung zwischen beiden Seitenbügeln so groß gewählt ist, daß beim Einführen des Einsteckteiles in das Kupplungsteil der jedem Rastarm zugeordnete Rastnocken zwischen beiden Seitenschenkeln dieses Rastarmes axial hindurchlaufen kann. Hierdurch wird eine einfach ausgebildete, aber sehr wirkungsvolle Verrastungsmöglichkeit geschaffen, die zudem in Folge des Rastbügels auch relativ großen Lösekräften zu widerstehen vermag.

Eine weitere bevorzugte Ausgestaltung der erfindungsgemäßen Anschlußvorrichtung besteht auch darin, daß die Halteeinrichtung des Kupplungsteiles längs dessen Umfangs zueinander versetzt angebrachte, im wesentlichen axial verlaufende Federzungen aufweist, an deren Enden jeweils ein radial nach innen gerichteter Rastvorsprung, etwa in Form einer Rastnase, angebracht ist, mittels derer er zum Sichern des Wellschlauches gegen ein Abziehen in ein Wellental zwischen zwei Wellenbergen des hindurchlaufenden Wellschlauches hineinragt.

Dabei sind bevorzugt die Federzungen an ihren vorstehenden Enden radial außen jeweils mit einer zu ihrem Ende hin abfallenden Einlaufschräge versehen, die beim axialen Einführen des Einsteckteiles in das Kupplungsteil mit einer entsprechenden Gegenschräge am Einlauf der Innenseite des den Federzungen zugewandten Endbereiches des Einsteckteiles zusammenwirkt, wobei im eingekuppelten Zustand jede Federzunge in Richtung radial nach außen (und damit entgegen einem Lösen der Abziehsicherung für den Wellschlauch) blockiert ist. Dadurch kann im montierten, eingekuppelten Zustand der Anschlußvorrichtung eine wirkungsvolle Abziehsicherung für den Wellschlauch gewährleistet werden.

Es ist weiterhin von Vorteil, wenn bei der erfindungsgemäßen Anschlußvorrichtung in deren eingekoppeltem Zustand die Halteeinrichtung des Kupplungsteiles von der Innenwand des Einsteckteiles, gegen die sie mit ihrer äußeren Mantelfläche anliegt, in blockierenden Formschluß mit der Außenform der Wellschlauchwandung gedrückt wird.

Bei der erfindungsgemäßen Anschlußvorrichtung kann die dort im Einsteckteil eingesetzte, in dieses zunächst nur lose eingeschobene Dichtungsbuchse, die erst im vollmontierten Zustand unter Druck steht, jede geeignete Form aufweisen. Vorteilhafterweise ist sie jedoch mit einer im wesentlichen zylindrischen Form ausgeführt, die an ihrem am eingeschobenen Ende des Wellschlauches liegenden Ende in eine kreisförmige Abschlußplatte übergeht, in der eine zentrale kreisförmige Durchlaßöffnung ausgebildet ist. Eine solche einfache Form für die Dichtungsbuchse ist jedoch sehr wirkungsvoll, weil sie ein leichtes Einschieben des Wellschlauches bei der Montage gestattet und mit der kreisförmigen Abschlußplatte auch gleichzeitig eine sichere Anschlagfläche für die zugeordnete Stirnseite des eingeschobenen Wellschlauches bildet.

In besonders vorteilhafter Ausgestaltung der Erfindung wird das Einsteckteil auf seiner dem Kupplungsteil abgewandten Seite so ausgebildet, daß es unter Verringerung seines Durchmessers einen Anschlußstutzen ausbildet, dessen Innendurchmesser dem freien Innendurchmesser des Wellschlauches entspricht. Die hierbei auftretende Verringerung des Innendurchmessers des Einsteckteiles kann gleichzeitig auch dazu eingesetzt werden, als axialer Anschlag für das dem Kupplungsteil abgewandte axiale Ende der Dichtungsbuchse zu dienen.

Der hierbei entstehende Anschlußstutzen kann entweder als direkter Anschluß an eine Wand, z. B. eine Behälterwand eines Flüssigkeitsaufnahmebehälters eines Wischwassersystems bei einem Kraftfahrzeug o. ä., dienen oder es könnte gleichermaßen dort z. B. auch wieder über eine entsprechende Kupplungseinrichtung das Ende einer anderen Wellschlauchleitung angeschlossen werden.

Ganz besonders bevorzugt wird jede Rastnocke des Einsteckteiles an ihrem Außenumfang mit einer Anlaufschräge versehen, die in Einsteckrichtung hin abfällt und gegen die beim axialen Einführen des Einsteckteiles in das Kupplungsteil der jeweils zugeordnete Rastarm unter elastischer, radialer Ausfederung anläuft. Hierdurch kann eine sehr wirksame und außerordentlich rasche Montage von Kupplungsteil und Einsteckteil mit einem minimalen Zeitaufwand gewährleistet werden.

Bei der erfindungsgemäßen Anschlußvorrichtung werden vorzugsweise das Kupplungsteil und das Einsteckteil jeweils mit vier um 90° zueinander in Umfangsrichtung versetzt liegenden Rastnocken (Einsteckteil) bzw. Rastarmen (Kupplungsteil) versehen.

Bei der erfindungsgemäßen Anschlußvorrichtung werden besonders bevorzugt das Kupplungsteil und/oder das Einsteckteil aus Kunststoff, erneut bevorzugt aus POM, und die Dichtungsbuchse aus einem thermoplastischen Elastomer (TPE) hergestellt.

Weiter bevorzugt werden am Außenmantel der Einsteckteiles noch mindestens ein weiterer, bevorzugt aber zwei oder vier weitere Rastnocken als Vorrastnocken in einem axialen Abstand von den Rastnocken - in Einschieberichtung des Einschiebeteils in das Kupplungsteil hin versetzt - angeordnet, deren jeder einem Rastnocken entsprechend plaziert ist und vom Außenmantel des Einsteckteiles nach außen übersteht, wobei dabei der axiale Abstand mindestens der axialen Erstreckung der Rastarme entsprechend gewählt ist. Damit können Kupplungsteil und Einsteckteil bereits in einer Stellung, in der sie aneinander noch nicht endverrastet sind, vorverrastet und damit ein Lösen voneinander während z. B. eines Transportes oder beim Handling vor dem Endverrasten vermieden werden.

Insgesamt ergibt die erfindungsgemäße Anschlußvorrichtung eine relativ einfach aufgebaute Anordnung, die bereits vorkonfektioniert dem Benutzer angeliefert werden kann, wobei dieser den anzuschließenden Wellschlauchabschnitt nicht in einer vorkonfektionierten Länge beziehen muß, sondern aus Rollenmaterial selbst abwickeln und abschneiden kann. Zudem ist die erfindungsgemäße Anschlußvorrichtung rasch montierbar, wobei auch die eingesetzte Dichtung, die im eingekurbelten Zustand unter axialer Druckvorspannung steht, für eine hervorragende Abdichtung zwischen Wellschlauch und Einsatzteil sorgt.

Die Erfindung wird nachfolgend anhand der Zeichnung im Prinzip beispielshalber noch näher erläutert. Es zeigen:
- Fig. 1: eine Seitenansicht einer erfindungsgemäßen Anschlußvorrichtung im vorkonfektioniertem Zustand, in welchem ein Wellschlauch bereits eingesteckt ist;
- Fig. 2: einen Schnitt durch die Anordnung aus Fig. 1 gemäß Schnittalge A-A in Fig. 1;
- Fig. 3: eine der Schnittdarstellung aus Fig. 2 entsprechende Schnittansicht, hier jedoch im eingerasteten, verkoppelten Zustand (Endstellung), und
- Fig. 4: eine Perspektivdarstellung eines Kupplungsteiles gemäß einer weiteren Ausführungsform der Erfindung.

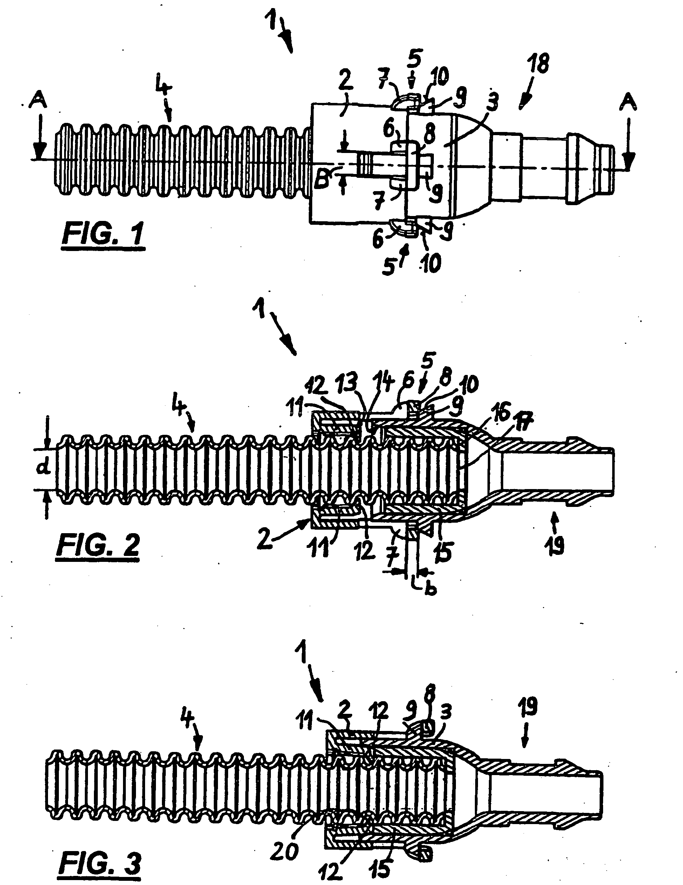

In Fig. 1 ist eine Anschlußvorrichtung 1 in Seitenansicht gezeigt, die ein Kupplungsteil 2 sowie ein in dieses teilweise eingeführtes Einsteckteil 3 umfaßt, in welches ein Endstück eines Wellschlauches 4 von der Seite des Kupplungsteiles 2 her eingesteckt ist.

Am Umfang des Kupplungsteiles 2 sind in dessen dem Einsteckteil 3 zugewandten Endbereich seines Mantels vier jeweils um 90° in Umfangsrichtung zueinander versetzte, von der Außenmantelfläche des Kupplungsteiles 2 vorstehende und zum Einsteckten 3 hin gerichtete, radial ausfederbare Rastarme 5 vorgesehen. Jeder Rastarm 5 ist in der in den Figuren gezeigten Ausführungsform aus zwei von der äußeren Mantelfläche des Kupplungsteiles 2 aus gekrümmt nach außen und in Richtung zum Einsteckteil 3 hin verlaufenden, zueinander in Umfangsrichtung um einen Abstand ***B*** entfernten Seitenschenkeln 6 und 7 gebildet, die an ihren frei vorspringenden Enden über einen Rastbügel 8 (in Form eines Querbügels) miteinander verbunden sind, der seinerseits in der Seitenansicht, wie Fig. 1 zeigt, eine zur Längsmittenlinie der Anschlußvorrichtung senkrechte Ausrichtung (nämlich in Umfangsrichtung gerichtet) ausweist.

In Zuordnung zu jedem der Rastarme 5 sind am Außenumfang des Einsteckteiles 3, entsprechend wiederum zueinander in Umfangsrichtung um jeweils 90° versetzt, radial nach außen hin vorspringende Rastnocken 9 angebracht, und zwar derart, daß - wie Fig. 1 zeigt - bei einem axialen Zusammenschieben von Kupplungsteil 2 und Einsteckteil 3 (am Ende der Montage) jeweils der jedem Rastnocken 9 zugeordnete Rastbügel 8 über eine am radial äußeren Ende des zugeordneten Rastnockens 9 angebrachte Auflaufschräge 10 unter elastischer Ausfederung der Seitenschenkel 6 und 7 (radial nach außen) ausgelenkt wird und gleichzeitig der betreffende Rastnocken 9 zwischen den beiden Seitenschenkeln 6 und 7 hindurch auf die ihrer Lage in Fig. 1 gegenübertiegende Seite des jeweiligen Rastbügels 8 durchlaufen kann. Wenn er vollständig unter dem Rastbügel 8 hindurchgelaufen ist und dieser somit das radial äußerste Ende der Schrägfläche 10 und des Rostnockens 9 überlaufen hat, federt er in seine in Fig. 2 gezeigte radiale Ausgangsstellung zurück, und zwar direkt auf der dem Kupplungsteil 2 abgewandten Rückseite des betreffenden Rastnockens 9.

Diese verkoppelte Raststellung ist in Fig. 3 im Schnitt dargestellt.

Wie aus der Schnittdarstellung der Fig. 2 und 3 hervorgeht, ist das Kupplungsteil 2 in seinem Inneren mit einer Halteeinrichtung in Form von in Umfangsrichtung zueinander verteilt angeordneten Federzungen 11 versehen, die in ihrer Ruhestellung, welche In Fig. 2 dargestellt ist, im wesentlichen koaxial zur Längsmittelachse der Anschlußvorrichtung 1 und des Wellschlauches 4 verlaufen und an ihren freien Enden jeweils mit einem radial nach innen vorspringenden Rastvorsprung in Form einer Rastnase 12 versehen sind, der bzw. die jeweils, in der Ruhestellung der Federzungen 11, in ein an der Außenkontur des eingeführten Wellschlauches 4 umlaufendes Wellental (zwischen zwei axial zueinander versetzten Wellenbergen) eingreift.

Wie aus Fig. 2 weiterhin entnommen werden kann, ist jede Rastnase auf ihrer dem Einsteckteil 3 abgewandten Rückseite mit einer Einlaufschräge 20 versehen, die, wie Fig. 2 deutlich zeigt, beim Einschieben des Wellschlauches 4 in das Kupplungsteil 2 und an diesem weiter in das Einsteckteil 3 mit den in Einschieberichtung vorne liegenden Seitenflanken der Wellenberge zusammenwirkt, wodurch beim Einschieben die Federzungen 11 soweit radial nach außen gedrückt werden, bis die betreffende Rastnase 12 an jeder Federzunge 11 aus dem Wellental, in das sie eingegriffen hat, herausgelaufen ist und dadurch der Wellschlauch 4 problemfrei und ohne Störung eingeschoben werden kann.

Im vollständig eingeschobenen Zustand des Wellschlauches 4 greift, im vorkonfektionierten Zustand von Kupplungsteil 2 und Einsteckteil 3, jede Rastnase 12 der Federzungen 11 wieder formschlüssig in ein entsprechendes Wellental ein und verhindert, da sie auf ihrer dem Einsteckteil 3 zugewandten Stirnfläche keine Einlaufschräge aufweist, sondern dort senkrecht zur Mittellängsachse der Anschlußvorrichtung 1 und des Wellschlauches 4 ausgerichtet ist, ein unerwünschte Zurücklaufen des Wellschlauches 4 aus Einsteckteil 3 und Kupplungsteil 2.

Jede Federzunge 11 ist aber zudem, wie ebenfalls Fig. 2 zeigt, an dem radialen Außenumfang ihres vorstehenden Endes mit einer Einlaufschräge 13 versehen, welche beim weiteren Einschieben des Einsteckteiles 3 in das Kupplungsteil 2, mit einer am Ende der zugeordneten Öffnung des Einsteckteiles 3 an diesem an dessen Innenseite angebrachten gegenläufigen Einlaufschräge 14 in Wirkeingriff tritt.

Wird die Anschlußvorrichtung 1 aus der in Fig. 1 und 2 dargestellten vorkonfektionierten Ausgangsstellung, nach Einführung des Wellschlauches 4, in ihre verkoppelte Endstellung gemäß Fig. 3 überführt, dann laufen die Einlaufschrägen 13 der Federzungen 11 und 14 des Einsteckteiles 3 gegeneinander an und, nachdem das Einsteckteil 3 in das Kupplungsteil 2 noch um eine gewisse, vorgewählte axiale Strecke weiter eingeschoben wird, tritt letztlich, im voll verkoppelten Zustand, die in Fig. 3 gezeigte Endlage für die Federzungen 11 ein: hier sind durch die Einlaufschräge 14 des Einsteckteiles 3 die Federzungen aus ihrer in Fig. 2 dargestellten Ausgangsstellung ein wenig radial nach innen gedrückt, so daß dadurch ein besonders fester und wirksamer Blockiereingriff der Rastvorsprünge 12 durch Eingriff in ein Wellental am Außenumfang des Wellschlauches 4 erreicht wird.

Wie Fig. 2 ferner zeigt, ist bereits im vorkonfektionierten Zustand der Anschlußvorrichtung 1 in das Innere des Einsteckteiles 3 eine Dichtungsbuchse 15 eingebracht, welche aus einem geeigneten Material, bevorzugt aus TPE, besteht und im wesentlichen die Form einer zylindrischen Büchse aufweist, welche an ihrem dem Kupplungsteil 2 abgewandten Ende in eine senkrecht zur Mittelachse der Anschlußvorrichtung 1 und des Wellschlauches 4 liegende, kreisringförmige Abschlußplatte 16 übergeht. In dieser ist eine zentrale kreisförmige Öffnung 17 vorgesehen, die ungefähr so groß ist wie der freie Innendurchmesser d des Wellschlauches 4.

Das Gehäuse des Einsteckteiles 3 bildet auf seiner dem Kupplungsteil 2 abgewandten Seite in einem axialen Abstand von den Rastnocken 9 unter Verringerung seines Außen- und Innendurchmessers einen Anschlußstutzen 18 aus. Wie die Fig. 2 und 3 zeigen, liegt in dem Bereich des Einsteckteiles 3, in dem die Durchmesserverringerung stattfindet und der dann in den Endabschnitt 19 des Anschlußstutzens übergeht, eine Abstützung der Dichtungsbuchse 15 in axialer Richtung vor, indem diese dort gegen die in Folge der Durchmesserverringerung radial schräg abfallende Innenwand dieses Abschnittes des Einsteckteiles 3 anläuft.

Im vorkonfektionierten Zustand, wenn also das Einsteckteil 3 bis auf die in Fig. 1 und 2 gezeigte Relativzuordnung in das Kupplungsteil 2 eingesteckt ist, ist die Dichtungsbuchse 15 nur lose in das Innere des Einsteckteiles 3 bis zum Anschlag eingesteckt.

Wenn dann nach Einschieben des Wellschlauches 4 in die vorkonfektionierte Anordnung der Zwischenzustand nach Fig.2 erreicht ist, indem das einschiebeseitige Ende des Wellschlauches 4 gegen die kreisförmige Abschlußplatte 16 der Dichtungsbuchse 15 anliegt, befinden sich die Federzungen 11, wie Fig. 2 zeigt, noch nicht in Anlage mit der zugewandten Stirnwand der Dichtungsbuchse 15.

Wenn dann die Anschlußvorrichtung 1 in ihren eingekoppelten Endzustand, den Fig. 3 zeigt, überführt wird, kommen die frei vorstehenden Endflächen der Federzungen 11 bzw. Rastnasen 12 nach Einlauf in die zugewandte Öffnung des Einsteckteiles 3 in Anlagekontakt mit der ihnen zugewandten Endfläche der Dichtungsbuchse 15. Da die Dimensionierung der Teile so gewählt ist, daß nach diesem anfänglichen Anlagekontakt das Einsteckteil 3 noch um eine kleine weitere axiale Strecke in das Kupplungsteil 2 eingeschoben wird, drücken die Federzungen 11 mit ihren vorstehenden Enden gegen die Dichtungsbuchse 15 und verkürzen diese axial um den genannten Abstand, wodurch die Dichtungsbuchse 15 in axialer Richtung unter gleichzeitiger geringfügiger axialer Verkürzung unter Vorspannung gesetzt wird. Diese Vorspannung der Dichtungsbuchse 15 führt dazu, daß diese sich nicht nur ganz satt und fest gegen die zugewandten Innenflächen des Einsteckteiles 3 anlegt, auch in dem Bereich, in dem das Einsteckteil 3 die Durchmesserverkleinerung zeigt, führt der in ihm aufgebaute Vorspanndruck zusätzlich aber auch zu einem besonders guten Anliegen gegen die Außenseiten der Wellenberge des Wellschlauches 4, so daß insgesamt eine vorzügliche Abdichtung zwischen dem Wellschlauch 4 und dem Einsteckteil 3 geschaffen wird.

In dieser Montageendstellung der Anschlußvorrichtung 1 sind die Federzungen 11 durch das Einsteckteil 3 dauerhaft gehindert, ausfedern zu können, wodurch eine wirksame Abziehsicherung für den Wellschlauch 4 erreicht wird.

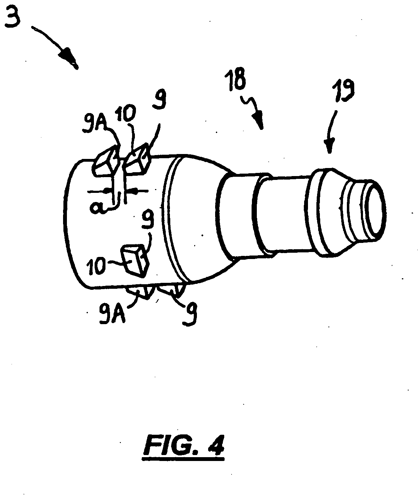

In Fig. 4 ist eine perspektivische Ansicht einer anderen Ausführungsform für ein Einsteckteil 3 dargestellt, bei dem neben den Rastnocken 9 für die Endverrastung in einem axialen Abstand a zu diesen (vgl. Fig. 4) noch zwei zueinander um 180° versetzte, weitere Rastnocken als Vorrastnocken 9A angebracht sind, wie dies in Fig. 4 im einzelnen illustriert ist, wobei auf die zeichnerische Darstellung insoweit ausdrücklich verwiesen wird. Diese Vorrastnocken 9A sind von gleicher Größe und Formgebung wie die Rastnocken 9 und dienen dazu, das bis zur axialen Anlage der Rastbügel 8 an die Rastnocken 9 eingeschobene Einsteckten 3, wie dies der Stellung aus Fig. 1 und 2 entspricht, auch schon in dieser Stellung mit dem Kupplungstell im Rahmen einer Vorverrastung zu verkoppeln. Damit können sich beide Teile in dieser Stellung, wenn aucn noch nicht endverrastet, während des Transportes und beim Handling vor der Endverrastung mit den Rastnocken 9 nicht mehr axial voneinander lösen. Zur Endverrastung müssen beide Teile dann nur noch um eine axiale Strecke entsprechend a weiter ineinander gesteckt und dabei die Rastarme 5 über die Schrägflächen der Rastnocken 9 hinübergeführt werden, wonach die Endverrastung erfolgt ist.

Falls gewünscht, kann die Strecke a auch so gewählt sein, daß sie etwas größer als die axiale Erstreckung ***b*** der Rastarme 5 (vgl. Fig. 2) ist. In diesem Fall wäre im vorverriegelten Zustand noch ein kleines axiales Spiel zwischen Kupplungsteil 2 und Einschiebeteil 3 vorhanden.

## Patentansprüche

1. Anschlußvorrichtung (1) für einen Wellschlauch (4) mit einem Wellschlauch (4), einem Kupplungsteil (2) sowie einem in dieses einführbaren Einsteckteil (3), wobei das Kupplungsteil (2) eine innere Halteeinrichtung (11) umfaßt, durch die der Wellschlauch (4) in Richtung auf das Einsteckteil (3) hindurchführbar ist, die dabei elastisch federnde Radialbewegungen ausführen kann, ihn aber gegen ein Abziehen sichert, wobei ferner der axiale Endabschnitt des Wellschlauches (4) bis zum Anschlag in eine im Inneren des Einsteckteiles (3) sitzende Dichtungsbuchse (15) hineinragt, die einen axialen Strömungsdurchlaß (17) ausbildet, und wobei im eingekuppelten Zustand die Halteeinrichtung (11) des Kupplungsteils (2) axial in die zugewandte Aufnahmeöffnung des Einsteckteiles (3) hineinragt und dabei gegen eine Freigabe des Wellschlauches (4) blockiert wird, ***dadurch gekennzeichnet,* daß** das Einsteckteil (3) an seinem Außenmantel über den Umfang zueinander versetzt angebrachte, nach außen überstehende Rastnocken (9) aufweist, wobei das Kupplungsteil (2) an seinem Außenmantel mit radial ausfederbaren, der Anordnung der Rastnocken (9) am Einsteckteil (3) entsprechend angebrachten Rastarmen (5) versehen ist, die beim axialen Einführen des Einsteckteiles (3) in das Kupplungsteil (2) unter elastischer radialer Auslenkung jeweils den zugeordneten Rastnocken (9) überlaufen und anschließend bei Erreichen des eingekuppelten Zustands direkt axial hinter dem Rastnocken (9) unter Verrastung mit diesem radial wieder einfedern, und daß ferner die Halteeinrichtung (11) des Kupplungsteils (2) im eingekuppelten Zustand in vorspannender Druckanlage mit der zugewandten axialen Stirnseite der Dichtungsbuchse (15) steht.

2. Anschlußvorrichtung nach Anspruch 1, bei der jeder Rastarm (5) zwei axial verlaufende, in Umfangsrichtung zueinander versetzte Seitenschenkel (6, 7) aufweist, die an ihren vorstehenden Enden über einen Rastbügel (8) miteinander verbunden sind, wobei der Abstand (B) in Umfangsrichtung zwischen den beiden Seitenbügeln (6, 7) so groß gewählt ist, daß beim Einführen des Einsteckteiles (3) der jedem Rastarm (5) zugeordnete Rastnocken (9) zwischen beiden zugeordneten Seitenschenkeln (6, 7) axial hindurchlaufen kann.

3. Anschlußvorrichtung nach Anspruch 1 oder 2, bei der die Halteeinrichtung des Kupplungsteiles (2) längs des Umfangs zueinander versetzt angebrachte, im wesentlichen axial verlaufende Federzungen (11) aufweist, an deren Enden jeweils eine radial nach innen gerichtete Rastnase (12) angebracht ist, die in ein Wellental zwischen zwei Wellenbergen des hindurchlaufenden Wellrohres (4) hineinragt.

4. Anschlußvorrichtung nach Anspruch 3, bei der die Federzungen (11) an ihren vorstehenden Enden radial außen jeweils mit einer Einlaufschräge (13) versehen sind, die beim axialen Einführen des Einsteckteiles (3) in das Kupplungsteil (2) mit einer entsprechenden Gegenschräge (14) an der Innenseite des den Federzungen (11) zugewandten Endbereiches des Einsteckteiles (3) zusammenwirkt, wobei im eingekuppelten Zustand jede Federzunge (11) in Richtung radial nach außen blockiert ist.

5. Anschlußvorrichtung nach einem der Ansprüche 1 bis 4, bei der im eingekuppelten Zustand die Halteeinrichtung (11) des Kupplungsteiles (2) von der Innenwand des Einsteckteiles (3) in blockierenden Formschluß mit der Außenform der Wellschlauchwandung (4) gedrückt wird.

6. Anschlußvorrichtung nach einem der Ansprüche 1 bis 5, bei welcher das Kupplungsteil (2) und/oder das Einsteckteil (3) aus Kunststoff, bevorzugt aus POM, bestehen/besteht.

7. Anschlußvorrichtung nach einem der Ansprüche 1 bis 6, bei welcher die Dichtungsbuchse (15) im Einsteckteil (3) eine Im wesentlichen zylindrische Form aufweist, die an ihrem am eingeschobenen Ende des Wellschlauches (4) liegenden Ende in eine kreisringförmige Abschlußplatte (16) übergeht, In der eine zentrale kreisförmige Durchlaßöffnung (17) ausgebildet ist.

8. Anschtußvorrichtung nach einem der Ansprüche 1 bis 7, bei welcher das Einsteckteil (3) auf seiner dem Kupplungsteil (2) abgewandten Seite unter Verringerung seines Durchmessers einen Anschlußstutzen (18) ausbildet, dessen Innendurchmesser dem freien Innendurchmesser (d) des Wellschlauches (4) entspricht.

9. Anschlußvorrichtung nach einem der Ansprüche 1 bis 8, bei der jeder Rastnocken (9) des Einsteckteiles (3) an seinem Außenumfang mit einer Anlaufschräge (10) versehen ist, die in Einsteckrichtung hin abfällt und gegen die beim axialen Einführen des Einsteckteiles (3) in das Kupplungsteil (2) der jeweils zugeordnete Rastarm (5) unter elastischer radialer Ausfederung anläuft.

10. Anschlußvorrichtung nach einem der Ansprüche 1 bis 9, bei welcher das Kupplungsteil (2) und das Einsteckteil (3) jeweils vier um 90° zueinander in Umfangsrichtung versetzt liegende Rastnocken (9) bzw. Rastarme (5) umfaßt.

11. Anschlußvorrichtung nach einem der Ansprüche 1 bis 10, bei welcher die Dichtungsbuchse (15) aus einem thermoplastischen Elastomerwerkstoff (TPE) besteht.

12. Anschlußvorrichtung nach einem der Ansprüche 1 bis 11, bei welcher am Außenmantel des Einsteckteiles (3) noch mindestens ein weiterer, bevorzugt zwei oder vier weitere Rastnocken (9A) in einem axialen Abstand (a) von den Rastnocken (9), in Einschieberichtung in das Kupplungsteil (2) hinein versetzt, angeordnet sind, deren jeder einem Rastnocken (9) entsprechend plaziert vom Außenmantel des Einsteckteiles (3) nach außen übersteht, wobei der Abstand (a) mindestens der Erstreckung (b) der Rastarme (5), in axialer Richtung der Vorrichtung (1) gesehen, entsprechend gewählt ist.

## Claims

1. Connection device (1) for a corrugated hose (4) with a corrugated hose (4), a coupling part (2) and an insertion part (3) which can be introduced into said coupling part, the coupling part (2) comprising an inner retaining apparatus (11), through which the corrugated hose (4) can be guided in the direction of the insertion part (3), which can therein execute elastically resilient radial movements, but secures it against being pulled out, the axial end portion of the corrugated hose (4) furthermore projecting up to the stop into a sealing bush (15) sitting inside the insertion part (3), which sealing bush (15) forms an axial flow passage (17), and, in the coupled state, the retaining apparatus (11) of the coupling part (2) projecting axially into the facing receiving opening of the insertion part (3) and therein being blocked against a release of the corrugated hose (4), ***characterised in that*** the insertion part (3) has detent cams (9) which are attached to its outer casing in a manner offset to one another across the circumference and protrude outwards, the clutch part (2) being provided on its outer casing with radially rebounding detent arms (5) attached in accordance with the arrangement of the detent cams (9) on the insertion part (3), which detect arms (5), during axial introduction of the insertion part (3) into the coupling part (2), run, under elastic radial deflection, in each case across the assigned detent cam (9) and subsequently, on reaching the coupled state, directly axially behind the detent cam (9) are once again radially compressed under locking with the detent cam (9), and that furthermore the retaining apparatus (11) of the coupling part (2), in the coupled stated, is in prestressing pressure bearing with the facing axial face of the sealing bush (15).

2. Connection device according to Claim 1, in which each detent arm (5) has two axially running lateral limbs (6, 7) which are offset to one another in the circumferential direction and are connected to one another at their projecting ends via a detent strap (8), the distance (B) in the circumferential direction between the two lateral straps (6, 7) being selected to be so large that, when introducing the insertion part (3), the detent cam (9) assigned to each detent arm (5) being capable of running through axially between the two assigned lateral limbs (6, 7).

3. Connection device according to Claim 1 or 2, in which the retaining apparatus of the coupling part (2) has flexible tongues (11) which are attached offset to one another along the circumference and run substantially axially and at the ends of which in each case a detent nose (12) directed radially inwards is attached which projects into a wave trough between two wave crests of the corrugated hose (4) which runs through.

4. Connection device according to Claim 3, in which the flexible tongues (11) are provided at their projecting ends radially externally in each case with a run-in slope (13), which, during axial introduction of the insertion part (3) into the coupling part (2), interacts with a corresponding counter-slope (14) on the inside of the end region, facing the flexible tongues (11), of the insertion part (3), each flexible tongue (11), in the coupled state, being blocked in the radially outward direction.

5. Connection device according to one of Claims 1 to 4, in which, in the coupled state, the retaining apparatus (11) of the coupling part (2) is pressed by the inner wall of the insertion part (3) in blocking positive locking with the outer shape of the corrugated hose wall (4).

6. Connection device according to one of Claims 1 to 5, in which the coupling part (2) and/or the insertion part (3) is/are composed of plastic, preferably of POM.

7. Connection device according to one of Claims 1 to 6, in which the sealing bush (15) in the insertion part (3) has a substantially cylindrical shape, which forms a transition at its end located at the pushed-in end of the corrugated hose (4) into a circular ring-shaped closing plate (16) in which a central circular passage opening (17) is formed.

8. Connection device according to one of Claims 1 to 7, in which the insertion part (3) forms a connection piece (18) on its side facing away from the coupling part (2) while reducing its diameter, the inner diameter of which connection piece (18) corresponds to the free inner diameter (d) of the corrugated hose (4).

9. Connection device according to one of Claims 1 to 8, in which each detent cam (9) of the insertion part (3) is provided on its outer circumference with a run-in slope (10) which falls in the insertion direction and against which, during axial introduction of the insertion part (3) into the coupling part (2), the respectively assigned detent arm (5) runs up under elastic radial rebounding.

10. Connection device according to one of Claims 1 to 9, in which the coupling part (2) and the insertion part (3) comprises in each case four detent cams (9) or detent arms (5) which are offset by 90° to one another in the circumferential direction.

11. Connection device according to one of Claims 1 to 10, in which the sealing bush (15) is composed of a thermoplastic elastomer material (TPE).

12. Connection device according to one of Claims 1 to 11, in which, on the outer casing of the insertion part (3), at least one further, preferably two or four further detent cams (9A) are arranged at an axial distance (a) from the detent cams (9), offset in the pushing-in direction into the coupling part (2), of which each detent cam (9) projects outwards correspondingly positioned from the outer casing of the insertion part (3), the distance (a) at least of the extension (b) of the detent arms (5) being correspondingly selected, as seen in the axial direction of the device (1).

## Revendications

1. Dispositif de raccordement (1) pour un tuyau ondulé flexible (4) avec un tuyau ondulé flexible (4), une partie de couplage (2) ainsi qu'une partie mâle (3) pouvant être introduite dans celle-ci, dans lequel la partie de couplage (2) comprend un dispositif de retenue (11), à travers lequel le tuyau ondulé (1) peut être introduit en direction de la partie mâle (3), qui peut en l'occurrence exécuter des mouvements radiaux élastiques mais qui le bloque contre un retrait, dans lequel en outre la partie d'extrémité axiale du tuyau ondulé flexible (4) pénètre jusqu'à butée dans une douille d'étanchéité (15) logée à l'intérieur de la partie mâle (3) et formant un passage d'écoulement axial (17), et dans lequel, à l'état couplé, le dispositif de retenue (11) de la partie de couplage (2) pénètre axialement dans l'ouverture de réception opposée de la partie mâle (3) et est en l'occurrence bloquée contre un dégagement du tuyau ondulé flexible (4), **caractérisé en ce que** la partie mâle (3) présente, sur sa surface latérale extérieure, des ergots d'encliquetage (9) saillants vers l'extérieur et placés en décalage l'un par rapport à l'autre sur la périphérie, dans lequel la partie de couplage (2) est munie, sur sa surface latérale extérieure, de bras d'encliquetage extensibles radialement (5), placés de manière correspondante à l'agencement des ergots d'encliquetage (9) sur la partie mâle (3), et qui, lors de l'introduction axiale de la partie mâle (3) dans la partie de couplage (2), franchissent respectivement l'ergot d'encliquetage associé (9) grâce à une déviation radiale élastique et ensuite, ayant atteint l'état couplé, se replacent de nouveau directement axialement derrière l'ergot d'encliquetage (9) en s'accrochant radialement à celui-ci, et **en ce que** le dispositif de retenue (11) de la partie de couplage (2) est en outre, à l'état couplé, en appui de compression précontraint avec la face frontale opposée de la douille d'étanchéité (15).

2. Dispositif de raccordement selon la revendication 1, dans lequel chaque bras d'encliquetage (5) présente deux branches latérales (6, 7) décalées l'une par rapport à l'autre en direction périphérique, qui sont reliées l'une à l'autre à leurs extrémités saillantes par un étrier d'encliquetage (8), dans lequel la distance (B) en direction périphérique entre les deux branches latérales (6, 7) est choisie suffisamment grande pour que, lors de l'introduction de la partie mâle (3), l'ergot d'encliquetage (9) associé à chaque bras d'encliquetage (5) puisse se glisser axialement entre les deux branches latérales associées (6, 7).

3. Dispositif de raccordement selon la revendication 1 ou 2, dans lequel le dispositif de retenue de la partie de couplage (2) présente des languettes élastiques (11) s'étendant essentiellement en direction axiale, placées en décalage l'une par rapport à l'autre le long de la périphérie, aux extrémités desquelles est respectivement placé un ergot d'encliquetage (12) orienté radialement vers l'intérieur, qui pénètre dans une vallée de l'ondulation entre deux crêtes de l'ondulation du tuyau ondulé engagé (4).

4. Dispositif de raccordement selon la revendication 3, dans lequel les languettes élastiques (11) sont respectivement munies à leurs extrémités avant, radialement à l'extérieur, d'une rampe d'entrée (13) qui, lors de l'introduction axiale de la partie mâle (3) dans la partie de couplage (2), coopère avec une rampe opposée correspondante (14) sur le côté intérieur de la région d'extrémité de la partie mâle (3) tournée vers les languettes élastiques (11), dans lequel chaque languette élastique (11) est, à l'état couplé, bloquée en direction radiale vers l'extérieur.

5. Dispositif de raccordement selon l'une quelconque des revendications 1 à 4, dans lequel, à l'état couplé, le dispositif de retenue (11) de la partie de couplage (2) est pressé par la paroi intérieure de la partie mâle (3) en emboîtement de blocage avec la forme extérieure de la paroi du tuyau ondulé flexible (4).

6. Dispositif de raccordement selon l'une quelconque des revendications 1 à 5, dans lequel la partie de couplage (2) et/ou la partie mâle (3) est/sont constituée(s) de matière plastique, en particulier de POM.

7. Dispositif de raccordement selon l'une quelconque des revendications 1 à 6, dans lequel la douille d'étanchéité (15) dans la partie mâle (3) présente une forme essentiellement cylindrique, qui se poursuit, à son extrémité située à l'extrémité introduite du tuyau ondulé flexible (4), en une plaque de raccordement annulaire circulaire (16), dans laquelle une ouverture de passage circulaire centrale (17) est formée.

8. Dispositif de raccordement selon l'une quelconque des revendications 1 à 7, dans lequel la partie mâle (3) forme, sur son côté situé à l'opposé de la partie de couplage (2), par une diminution de son diamètre, un embout de raccordement (18), dont le diamètre intérieur correspond au diamètre intérieur libre (d) du tuyau ondulé flexible (4).

9. Dispositif de raccordement selon l'une quelconque des revendications 1 à 8, dans lequel chaque ergot d'encliquetage (9) de la partie mâle (3) est muni, sur sa périphérie extérieure, d'une rampe d'engagement (10), qui descend dans la direction d'engagement et contre laquelle le bras d'encliquetage respectivement associé (5) vient s'engager, avec une déviation radiale élastique, lors de l'introduction axiale de la partie mâle (3) dans la partie de couplage (2).

10. Dispositif de raccordement selon l'une quelconque des revendications 1 à 9, dans lequel la partie de couplage (2) et la partie mâle (3) comprennent respectivement quatre ergots d'encliquetage (9) ou bras d'encliquetage (5) placés avec un décalage de 90° l'un par rapport à l'autre en direction périphérique.

11. Dispositif de raccordement selon l'une quelconque des revendications 1 à 10, dans lequel la douille d'étanchéité (15) se compose d'un matériau élastomère thermoplastique (ETP).

12. Dispositif de raccordement selon l'une quelconque des revendications 1 à 11, dans lequel encore au moins un, de préférence deux ou quatre ergots d'encliquetage supplémentaires (9A) sont disposés sur la surface latérale extérieure de la partie mâle (3), à une distance axiale (a) des ergots d'encliquetage (9), avec un décalage dans la direction d'introduction dans la partie de couplage (2), dont chacun, placé en correspondance avec un ergot d'encliquetage (9), est saillant vers l'extérieur à partir de la surface latérale extérieure de la partie mâle (3), dans lequel la distance (a) est choisie d'une manière correspondant au moins à l'extension (b) des bras d'encliquetage (5), vus en direction axiale du dispositif (1).
